# EUROPÄISCHE PATENTSCHRIFT

(11) **EP 2 913 541 B1**
(45) Veröffentlichungstag und Bekanntmachung des Hinweises auf die Patenterteilung: **10.05.2017**
(21) Anmeldenummer: 15155253.6
(22) Anmeldetag: 16.02.2015
(51) Int. Cl.: F16C 17/10, F16C 17/02, F16C 17/04, F16C 32/06

(54) **Pleuel**
Connecting rod
Bielle

(30) Priorität: 28.02.2014 DE 102014203663
(43) Veröffentlichungstag der Anmeldung: 02.09.2015
(73) Patentinhaber: Mahle International GmbH, 70376 Stuttgart (DE)
(72) Erfinder: Pumareda, Arnaud, 70734 Fellbach (DE); Hemetzberger, Sebastian, 73760 Ostfildern (DE)
(74) Vertreter: BRP Renaud & Partner mbB Rechtsanwälte Patentanwälte Steuerberater

(56) Entgegenhaltungen:
- DE-C- 475 197
- FR-A- 828 865
- US-A- 2 729 521

## Beschreibung

Die Erfindung betrifft einen Pleuel nach dem Oberbegriff des Anspruchs 1 sowie eine Hubkolbenmaschine, insbesondere einen Motor, nach dem Oberbegriff des Anspruchs 9.

Eine Fluidenergiemaschine, bei der Kolben in Zylindern eine oszillierende Axialbewegung vollführen, wird im Maschinenbau als Kolbenmaschine bezeichnet. Die Übertragung der mechanischen Arbeit erfolgt bei derartigen Kolbenmaschinen typischerweise mittels spezieller Schubstangen, sogenannter Pleuel, die die Linear-bewegung des Kolbens in die Drehbewegung einer sogenannten Kurbelwelle umsetzen. Gebräuchliche Werkstoffe für Pleuel nach dem Stand der Technik umfassen neben dem traditionell verwendeten Gusseisen vor allem mikrolegierte Stähle und Sintermetalle. Für vereinzelte Anwendungen, etwa im Sportmotorenbereich, werden alternativ spezielle Vergütungsstähle oder das besonders leichte Titan eingesetzt.

Eine weite Verbreitung genießen dabei vor allem sogenannte gecrackte Pleuel. Ein derartiger Pleuel wird zunächst einteilig hergestellt, dann - je nach verwendetem Grundwerkstoff - mit einer Bruch- oder Laserkerbe versehen und schließlich gezielt in zwei Teile gebrochen. Beide Teile werden bei der Pleuelmontage verschraubt und passen dabei entlang ihrer gegenseitigen Bruchflächen eindeutig zusammen. Den Aufbau solchermaßen geteilter Pleuel erläutern Greuter/Zima/Hoffmann in "Motorschäden", Vogel Buchverlag, ISBN 3-8343-3056-6, Seiten 203 f.

Ein lasergekerbter Pleuel ist beispielsweise aus DE 10 2004 026 297 A1 bekannt. Am dort beschriebenen Pleuel ist ein Lager vorgesehen, welches eine durch das Lager verlaufende Trennfläche aufweist, die durch Bruchtrennen des Lagers gebildet ist, wobei das Lager abschnittsweise mit einer Trennkerbe versehen ist, die über ihre Gesamtlänge hinweg aus Variationen in Bezug auf ihre Winkelausrichtung gegenüber der Teilungsebene besteht, wobei die diesen Variationen entsprechenden Kerbungsabschnitte parallel zu einer Schnittlinie der Trennebene mit der Lagerfläche verlaufen.

Aus der DE 475 197 C ist ein gattungsgemäßer Pleuel bekannt.

Als problematisch erweist sich dabei die exakte, reproduzierbare Positionierung des abgetrennten sogenannten Pleueldeckels im Rahmen der Pleuelmontage. Zudem gilt es, die im Betrieb des Kurbeltriebs auf den Pleuel wirkenden Seitenkräfte zu übertragen. Aus dem Stand der Technik ist im Hinblick auf diese Problemstellung die Verwendung senkrecht zum Pleuelstoß verlaufender Stifte zur zusätzlichen axialen Stabilisierung gecrackter oder anderweitig geteilter Pleuel bekannt.

Der Erfindung liegt die Aufgabe zugrunde, einen Pleuel zu schaffen, welcher die beschriebenen Funktionen unter Verzicht auf zusätzliche Stifte erfüllt. Die Erfindung stellt sich ferner der Aufgabe, eine entsprechende Hubkolbenmaschine zu schaffen.

Diese Aufgaben werden durch einen Pleuel mit den Merkmalen des Anspruchs 1 und eine entsprechende Hubkolbenmaschine mit den Merkmalen des Anspruchs 9 gelöst.

Die Erfindung fußt demnach auf dem Grundgedanken, die übliche Bruchkante gecrackter sogenannter Bruchpleuel durch eine axial wirksame, planseitige Verzahnung zu ersetzen, die im Maschinenbau als Plan-Kerb- oder Hirth-Verzahnung bekannt ist. Die Verwendung einer derartigen Verzahnung ist beispielsweise aus DE 37 44 197 A1bekannt, wo sie zur Verbindung geteilter Kurbelwellen genutzt wird. Die erfindungsgemäße Übertragung dieser Technik auf den Pleuelstoß erlaubt es einem geteilten Pleuel, den statisch und flächig am Pleuelsattel anliegenden Pleueldeckel zuverlässig in seiner vorgesehenen Relativposition zu fixieren, ohne dass der Einbau zusätzlicher Verbindungsstifte zur Sicherung des Pleuelstoßes erforderlich wäre. Dennoch ergibt sich auf geringstem Bauraum eine formschlüssige Verbindung, die selbst hohe Drehmomente und Belastungen aufzunehmen vermag.

Dabei eröffnet sich dem Fachmann im Rahmen der Fertigungsplanung eine Vielzahl möglicher Verfahrensoptionen insbesondere im Bereich der spanenden Trennverfahren gemäß DIN 8589. In Betracht kommt vorrangig das spanabhebende Bearbeiten des für den Pleuel gewählten Grundwerkstoffs im Wege einer geeigneten Frästechnik. Für eine weiter erhöhte Genauigkeit empfiehlt sich die Feinbearbeitung der Hirth-Verzahnung im Rahmen eines nachfolgenden Profilschliffs.Erfindungsgemäß ist die beschriebene Hirth-Verzahnung dabei derart ausgelegt, dass sie einen gegenüber dem Vollwinkel von 360° zurückbleibenden Zentriwinkel einschließt. Auf diese Weise eröffnet sich die konstruktive Möglichkeit, den Pleuelstoß mit einer zusätzlichen planen Fläche und zu dieser planparallelen Gegenoberfläche zu versehen, die Verzahnung und Lagerfläche des Pleuelauges über einen geeigneten Abstand räumlich voneinander trennen.

Vor allem unter fertigungspraktischen Gesichtspunkten erweist sich eine Formvariante als vorteilhaft, bei welcher besagter Zentriwinkel derart gewählt ist, dass zwei an die plane (Gegen-)Oberfläche angrenzende Zahnflanken der Hirth-Verzahnung in einer gemeinsamen Raumebene liegen. So lässt sich die entsprechende Oberfläche gemeinsam mit der angrenzenden Zahlflanke einfacher herstellen.

Eine stets angestrebte, da mit einer potentiellen Senkung der Stückkosten verbundene Vereinfachung mag sich auch dadurch ergeben, dass ein dem Halbwinkel von 180° entsprechender Zentriwinkel gewählt wird.

Einen anderen Vorzug indes bietet eine Ausgestaltung des Pleuels, bei welcher der Zahnkopf radial von innen nach außen zu- und der Zahngrund der Hirth-Verzahnung in selbiger Richtung abnimmt. Gegenüber einer alternativen Ausgestaltung mit rechtwinklig zur Mittelachse der Verzahnung verlaufenden Zahnköpfen und -gründen birgt die vorgeschlagene Formvariante den Vorteil einer selbstzentrierenden Wirkung des resultierenden Pleuelstoßes, die geringfügige Relativabweichungen zwischen Pleuelsattel und -deckel im Zuge der Pleuelmontage ausgleicht.

Weisen im letzteren Szenario der radiale Anstiegswinkel des Zahnkopfes und der entsprechende radiale Abstiegswinkel des Zahngrunds denselben Betrag auf, so lässt sich seitens Pleuelsattel und Pleueldeckel eine im Wesentlichen formgleiche Verzahnung einbringen, sodass beide Verbindungspartner eines erfindungsgemäßen Pleuels grundsätzlich mit identischem Werkzeug hergestellt werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: die perspektivische Teilansicht des Pleuellagers eines erfindungsgemäßen Pleuels und
- Fig. 2: die vergrößerte Seitenansicht des Pleuels im Bereich des Pleuelstoßes.

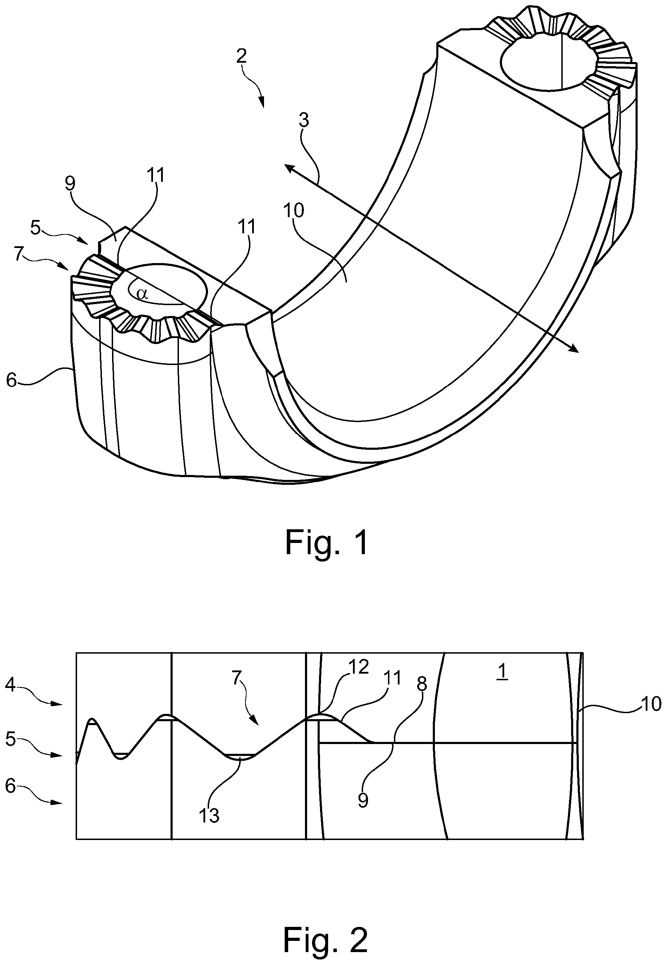

Die Figuren 1 und 2 illustrieren den konstruktiven Aufbau eines Pleuels 1 gemäß einer Ausführungsform der Erfindung. Besonderes Augenmerk kommt dabei dem charakteristischen hohlzylindrischen Pleuellager 2 mit seiner parallel zur Zylinderachse einer nicht gezeigten Pleuelbuchse ausgerichteten Lagerachse 3 zu. Figur 1 zeigt dieses Pleuellager 2 im Bereich seines - stofflich von den übrigen Komponenten des Pleuels 1 getrennten - Pleueldeckels 6. Die detailliertere Seitenansicht der Figur 2 hingegen verdeutlicht, wie sich dieser Pleueldeckel 6 über einen Pleuelstoß 5 formschlüssig mit einem komplementär zu dem Pleueldeckel 6 geformten Pleuelsattel 4 zum erfindungsgemäßen Gesamtaufbau des Pleuellagers 2 fügt.

Wie vor allem Figur 1 erkennen lässt, teilt sich der beidseitig der Lagerachse 3 angeordnete Pleuelstoß 5 dabei in eine plane Oberfläche 8 des Pleuelsattels 4, die mit einer planparallel angeordneten Gegenoberfläche 9 des Pleueldeckels 6 zusammenwirkt, sowie die an die Flächen 8, 9 angrenzende erfindungswesentliche Hirth-Verzahnung 7. Neben dem Pleuelstoß 5 umfasst das Pleuellager 2 zudem eine die Lagerachse 3 innerhalb des Pleuelsattels 4 und des Pleueldeckels 6 symmetrisch umlaufende Lagerfläche 10, in welche die Oberfläche 8 sowie die Gegenoberfläche 9 jeweils rechtwinklig einmünden, zur Aufnahme des mittels des Pleuellagers 2 gelagerten Kurbelzapfens einer übergeordneten Hubkolbenmaschine.

Die spezifische Anordnung der Hirth-Verzahnung 7 an der Außenseite des Pleuelstoßes 5 sowie der durch sie eingeschlossene Zentriwinkel α von lediglich 180° bedingen dabei, dass die Oberfläche 8 und die Gegenoberfläche 9 die Lagerfläche 10 räumlich von der Hirth-Verzahnung 7 trennt. Zudem folgt aus der Wahl des genannten Zentriwinkels α, dass, wie besonders Figur 1 veranschaulicht, zwei an der Gegenoberfläche 9 angrenzende Zahnflanken 11 der Hirth-Verzahnung 7 in einer gemeinsamen Raumebene liegen, was die Herstellung des Pleuels 1 vereinfacht.

Lediglich andeutungsweise zu entnehmen sind der Figur 1 indes die spezifischen Anstiegs- und Abstiegswinkel des in Figur 2 bezeichneten Zahnkopfes 12 und Zahngrundes 13. Insofern ist zu betonen, dass der Zahnkopf 12 in radialer Richtung der Hirth-Verzahnung 7 nach außen ansteigt, während der entsprechende Zahngrund 13 in eben dieser Richtung in einem entsprechenden Winkel nach außen abfällt.

## Patentansprüche

1. Pleuel (1) für eine Hubkolbenmaschine mit
- einer hohlzylindrischen Pleuelbuchse zum Aufnehmen eines Kolbenbolzens der Hubkolbenmaschine,
- einem hohlzylindrischen Pleuellager (2) mit einer parallel zu einer Zylinderachse der Pleuelbuchse verlaufenden Lagerachse (3) zum Lagern eines Kurbelzapfens der Hubkolbenmaschine und
- einem senkrecht zu der Lagerachse (3) zwischen der Pleuelbuchse und dem Pleuellager (2) verlaufenden länglichen Schaft zum Verbinden der Pleuelbuchse mit dem Pleuellager (2),
wobei das Pleuellager (2) einen stofflich mit dem Schaft verbundenen Pleuelsattel (4), einen stofflich von dem Schaft getrennten Pleueldeckel (6) und einen den Pleuelsattel (4) mit dem Pleueldeckel (6) formschlüssig verbindenden Pleuelstoß (5) umfasst,
wobei der Pleuelstoß (5) eine Hirth-Verzahnung (7) des Pleuelsattels (4) mit dem Pleueldeckel (6) umfasst,
**dadurch gekennzeichnet, dass**
die Hirth-Verzahnung (7) einen Zentriwinkel (α) von weniger als 360° einschliesst und dass der Pleuelstoß (5) ferner eine plane Oberfläche (8) des Pleuelsattels (4) und eine zu der Oberfläche (8) planparallele Gegenoberfläche (9) des Pleueldeckels (6) umfasst.

2. Pleuel nach Anspruch 1, **dadurch gekennzeichnet, dass**
das Pleuellager (2) eine die Lagerachse (3) innerhalb des Pleuelsattels (4) und des Pleueldeckels (6) symmetrisch umlaufende Lagerfläche (10) aufweist, wobei die Oberfläche (8) und die Gegenoberfläche (9) rechtwinklig in die Lagerfläche (10) münden.

3. Pleuel nach Anspruch 2, **dadurch gekennzeichnet, dass**
die Oberfläche (8) und die Gegenoberfläche (9) die Lagerfläche (10) räumlich von der Hirth-Verzahnung (7) trennen.

4. Pleuel nach Anspruch 1 in Verbindung mit Anspruch 3, **dadurch gekennzeichnet, dass**
der Zentriwinkel (α) so gewählt ist, dass zwei an die Oberfläche (8) oder an die Gegenoberfläche (9) angrenzende Zahnflanken (11) der Hirth-Verzahnung (7) in einer gemeinsamen Raumebene liegen.

5. Pleuel nach Anspruch 4, **dadurch gekennzeichnet, dass**
der Zentriwinkel (α) 180° beträgt.

6. Pleuel nach Anspruch 4 oder 5, **dadurch gekennzeichnet, dass**
die Hirth-Verzahnung (7) einen in einem ersten Winkel radial nach außen ansteigenden Zahnkopf (12) und einen in einem zweiten Winkel radial nach außen abfallenden Zahngrund (13) aufweist.

7. Pleuel nach Anspruch 6, **dadurch gekennzeichnet, dass**
der erste Winkel und der zweite Winkel betragsmäßig gleich sind.

8. Hubkolbenmaschine mit
- einem Hubkolben zum Vollführen einer oszillierenden Hubbewegung,
- einem den Hubkolben zumindest teilweise umschließenden Zylinder zum Führen der Hubbewegung und
- einer mit dem Hubkolben mechanisch verbundenen Kurbelwelle mit einem Kurbelzapfen zum Vollführen einer an die Hubbewegung gekoppelten Drehbewegung,
**gekennzeichnet durch**
einen den Hubkolben und die Kurbelwelle verbindenden Pleuel (1) nach einem der Ansprüche 1 bis 7 zum Koppeln der Hubbewegung und der Drehbewegung.

## Claims

1. Connecting rod (1) for a reciprocating piston machine, with
- a hollow-cylindrical connecting rod bushing for receiving a piston pin of the reciprocating piston machine,
- a hollow-cylindrical connecting rod bearing (2) having a bearing axis (3) running parallel to a cylinder axis of the connecting rod bushing for mounting a crank pin of the reciprocating piston machine, and
- an elongated shaft extending perpendicularly to the bearing axis (3) between the connecting rod bushing and the connecting rod bearing (2) for connecting the connecting rod bushing to the connecting rod bearing (2),
wherein the connecting rod bearing (2) comprises a connecting rod saddle (4) which is materially connected to the shaft, a connecting rod cap (6) which is materially separated from the shaft and a connecting rod joint (5) connecting the connecting rod saddle (4) to the connecting rod cap (6) in a form fitting manner,
wherein the connecting rod joint (5) comprises a Hirth serration (7) between the connecting rod saddle (4) and the connecting rod cap (6), **characterized in that**
the Hirth serration (7) includes a central angle (α) of less than 360°, and the connecting rod joint (5) further comprises a plane surface (8) defined by the connecting rod saddle (4) and a mating surface (9) defined by the connecting rod cap (6), the mating surface extending along a plane parallel to the surface (8).

2. Connecting rod according to claim 1,
**characterized in that**
the connecting rod bearing (2) comprises a bearing surface (10) which symmetrically surrounds the bearing axis (3) within the connecting rod saddle (4) and the connecting rod cap (6), wherein the surface (8) and the mating surface (9) extend into the bearing surface (10) at a right angle.

3. Connecting rod according to claim 2,
**characterized in that**
the surface (8) and the mating surface (9) spatially separate the bearing surface (10) from the Hirth serration (7).

4. Connecting rod according to claim 1 in connection with claim 3,
**characterized in that**
the central angle (α) is determined such that two tooth flanks (11) of the Hirth serration (7) adjoining the surface (8) or the mating surface (9) lie in a common space plane.

5. Connecting rod according to claim 4,
**characterized in that**
the central angle (α) amounts to 180°.

6. Connecting rod according to claim 4 or 5,
**characterized in that**
the Hirth serration (7) comprises a tooth head (12) defined by a first angle radially ascending outwardly and a tooth base (13) defined by a second angle radially descending outwardly.

7. Connecting rod according to claim 6,
**characterized in that**
the first angle and the second angle are equal.

8. Reciprocating piston machine, with
- a reciprocating piston for performing an oscillating stroke movement,
- a cylinder at least partially enclosing the reciprocating piston for guiding the stroke movement,
- a crankshaft having a crank pin mechanically connected to the reciprocating piston for performing a rotary movement coupled to the stroke movement, **characterized by**
a connecting rod (1) according to any of claims 1 to 7, connecting the reciprocating piston and the crankshaft for coupling the stroke movement and the rotary movement.

## Revendications

1. Bielle (1) pour une machine à pistons alternatifs avec
- une douille de bielle cylindrique et creuse pour la réception d'un boulon de piston de la machine à pistons alternatifs,
- un palier de bielle (2) cylindrique et creux avec un axe de palier (3) s'étendant parallèlement à un axe de cylindre de la douille de bielle pour le logement d'un maneton de la machine à pistons alternatifs et
- une tige oblongue s'étendant perpendiculairement à l'axe de palier (3) entre la douille de bielle et le palier de bielle (2) pour la liaison de la douille de bielle avec le palier de bielle (2),
dans laquelle le palier de bielle (2) comprend une selle de bielle (4) reliée par matière à la tige, un couvercle de bielle (6) séparé par matière de la tige et un coup de bielle (5) reliant à complémentarité de formes la selle de bielle (4) au couvercle de bielle (6),
dans laquelle le coup de bielle (5) comprend une denture Hirth (7) de la selle de bielle (4) avec le couvercle de bielle (6),
**caractérisée en ce que**
la denture Hirth (7) forme un angle de centrage (α) de moins de 360° et
**en ce que** le coup de bielle (5) comprend en outre une surface plane (8) de la selle de bielle (4) et une surface antagoniste (9) plane et parallèle à la surface (8) du couvercle de bielle (6).

2. Bielle selon la revendication 1,
**caractérisée en ce que**
le palier de bielle (2) présente une surface de palier (10) contournant de manière symétrique l'axe de palier (3) dans la selle de bielle (4) et le couvercle de bielle (6), dans laquelle la surface (8) et la surface antagoniste (9) débouchent à angles droits dans la surface de palier (10).

3. Bielle selon la revendication 2,
**caractérisée en ce que**
la surface (8) et la surface antagoniste (9) séparent la surface de palier (10) dans l'espace de la denture Hirth (7).

4. Bielle selon la revendication 1 en liaison avec la revendication 3,
**caractérisée en ce que**
l'angle de centrage (α) est choisi de sorte que deux flancs dentés (11) contigus à la surface (8) ou à la surface antagoniste (9) de la denture Hirth (7) se trouvent dans un plan spatial commun.

5. Bielle selon la revendication 4,
**caractérisée en ce que**
l'angle de centrage (α) est de 180°.

6. Bielle selon la revendication 4 ou 5,
**caractérisée en ce que**
la denture Hirth (7) présente une tête dentée (12) montant dans un premier angle radialement vers l'extérieur et un fond denté (13) descendant dans un second angle radialement vers l'extérieur.

7. Bielle selon la revendication 6,
**caractérisée en ce que**
le premier angle et le second angle sont identiques en valeur.

8. Machine à pistons alternatifs avec,
- un piston alternatif pour la réalisation d'un mouvement de levage oscillant,
- un cylindre entourant au moins partiellement le piston de levage pour le guidage du mouvement de levage et
- un vilebrequin relié mécaniquement au piston de levage avec un maneton pour la réalisation d'un mouvement rotatif couplé au mouvement de levage,
**caractérisée par**
une bielle (1) reliant le piston de levage et le vilebrequin selon l'une des revendications 1 à 7 pour le couplage du mouvement de levage et du mouvement de rotation.
